## Europäisches Patentamt

## European Patent Office

## Office européen des brevets

(11) Veröffentlichungsnummer: **0 014 886**
**B1**

(12) **EUROPÄISCHE PATENTSCHRIFT**

(45) Veröffentlichungstag der Patentschrift:
**24.03.82**

(21) Anmeldenummer: **80100550.5**

(22) Anmeldetag: **04.02.80**

(51) Int. Cl.³: **B 01 J 31/12,** C 08 F 4/46,
C 08 F 36/06, C 08 F 2/38

(54) Katalysator, dessen Herstellung und Verwendung bei der Herstellung von telomeren Polybutadien Homo- oder Copolymerisaten.

(30) Priorität: **15.02.79 DE 2905763**

(43) Veröffentlichungstag der Anmeldung:
**03.09.80 Patentblatt 80/18**

(45) Bekanntmachung des Hinweises auf die Patenterteilung:
**24.03.82 Patentblatt 82/12**

(84) Benannte Vertragsstaaten:
**BE DE FR GB IT NL**

(56) Entgegenhaltungen:
**US-A-3 324 191**
**US-A-3 751 501**
**US-A-4 104 465**

(73) Patentinhaber: **BAYER AG, Zentralbereich Patente, Marken und Lizenzen, D-5090 Leverkusen 1, Bayerwerk (DE)**

(72) Erfinder: **Wieder, Wolfgang, Dr., Walter-Flex-Strasse 11, D-5090 Leverkusen (DE)**
Erfinder: **Witte, Josef, Dr., Haferkamp 10, D-5000 Köln 80 (DE)**

ACTORUM AG.

Katalysator, dessen Herstellung und Verwendung bei der Herstellung von telomeren Polybutadien Homo-
oder Copolymerisaten

Die Erfindung betrifft einen Katalysator bestehend aus einer metallorganischen Verbindung, einem Alkalialkoxid und einem tertiären Triamin, dessen Herstellung durch Reaktion obiger Komponenten sowie dessen Verwendung bei der Polymerisation von Butadien in Gegenwart von Telogenen zu flüssigen telomeren Butadien-Homo-oder Copolymerisaten.

Es ist bereits bekannt, Butadien in Gegenwart von Übertragungsreagentien (Telogenen) mittels verschiedener Katalysatoren zu niedermolekularen flüssigen Telomeren umzusetzen. Als Telogene werden Alkylaromaten wie z. B. Toluol eingesetzt.

So beschreibt die US-PS 3 356 754 einen Ka-talysator bestehend aus Butyllithium und Kalium-tertiär-butoxid. Die US-PS 3 751 501 erwähnt als zusätzliche Katalysatorkomponente ein Amin wie beispielsweise Tetramethylethylendiamin (TMEDA). Die US-PS 3 678 121 offenbart einen Katalysatorkomplex aus einem Polylithium-Kohlenwasserstoff und Tetramethylethylendiamin (TMEDA). Die DE-OS 2 148 148 beschreibt einen Katalysator bestehend aus beispielsweise Butyl-lithium, Nickel-acetylacetonat, Kalium-tertiär-butoxid und Tetramethylethylendiamin.

Gemäss der US-PS 3 356 754 wird die Mono-mer/Telogenlösung vorgelegt und der Katalysator anschliessend zugegeben. Dies hat verschiedene Nachteile:

Die Molekulargewichtsregelung ist schlecht. Um zu flüssigen Produkten zu gelangen, müssen die Reaktionen in verdünnter Lösung durchgeführt werden (ca. 11 Gew.-%). Erwünscht sind aber geringe Lösungsmittelmengen; andererseits ist nach dem Verfahren der US-PS 3 356 754 die Reaktionskontrolle schwierig, so dass es insbesondere bei grösseren Ansätzen kritisch ist, die Monomerkonzentration zu erhöhen. Wie in der UP-PS 3 751 501 gezeigt wurde, weist das Kataly-satorsystem der US-PS 3 356 754 nur eine unbe-friedigende Telomerisationsaktivität auf.

Die in der genannten US-PS 3 751 501, US-PS 3 678 121 und DE-OS 2 148 148 als vorteilhaft be-schriebene Verfahrensweise besteht darin, das Telogen mit den verschiedenen Katalysatorsystemen vorzulegen und Butadien bei einer bestimmten Temperatur in das Reaktionsgemisch einzuleiten. Die eingesetzten Katalysatoren weisen folgende Nachteile auf:

Jeder der in den genannten PS'en beschriebenen Katalysatoren liefert ein Produkt mit einer für diesen Katalysator typischen Mikrostruktur. So weist ein Polybutadienöl, das gemäss US 3 678 121 hergestellt wurde, einen hohen Anteil an gesättigten cyclischen Strukturen und einen hohen Anteil an 1,2-Strukturen auf. Ein Katalysator der De-OS 2 148 148 liefert Öle mit einem Cis-1,4-Gehalt >20% und einem 1,2-Gehalt von >40%. Ty-pische Mikrostrukturen gemäss US-PS 3 751 501 enthalten >45% 1,2- und <20% 1,4-Cis-Strukturen. Mit Hilfe der genannten Katalysatoren ist es nicht möglich, abweichende Mikrostrukturen der Telomeren zu erhalten.

Ein vorteilhaftes Verfahren zur Herstellung niedermolekularer Polybutadien-Telomerer sollte nach Beendigung der Reaktion möglichst wenig Lösungsmittel enthalten und das hergestellte Produkt nur geringe Mengen an Katalysatorresten aufweisen.

Um diese Forderungen zu erfüllen, muss ein möglichst aktives Katalysatorsystem eingesetzt werden.

Die US-PS 4 104 465 beschreibt weiterhin einen Katalysator, bestehend aus RNa, einem Diamin oder einem tertiären aliphatischen Triamin und gegebenenfalls ein Alkali-t-alkoxilat zur Herstellung von hochmolekularen Butadien-homo oder Copolymerisaten mit einem Vinylgehalt von über 85%. Es konnte nicht erwartet werden, dass durch den Ersatz des erfindungsgemässen Katalysatorsystems bestehend aus RLi, einem tertiären aliphatischen Triamin und einem Alkali-t-alkoxilat niedermolekulare Butadienpolymerisate mit niedrigeren Vinylgehalten sich herstellen lassen. Wie aus Beispiel 1 zu entnehmen ist, wird das Molgewicht durch die Anwesenheit des Triamins stärker als durch ein Diamin erniedrigt.

Aufgabe der Erfindung ist es daher, ein Katalysatorsystem zur Verfügung zu stellen, welches gegenüber den bisher bekannt gewordenen Systemen erhebliche Vorteile aufweist.

Gegenstand der Erfindung ist somit ein Katalysatorsystem bestehend aus:

a) einer metallorganischen Verbindung RLi, in der R einen gesättigten aliphatischen oder aromatischen Kohlenwasserstoffrest mit 2 bis 8 C-Atomen darstellt.

b) einer Verbindung R'OMe', in der R' einen gesättigten aliphatischen oder aromatischen Kohlenwasserstoffrest mit 2 bis 8 C-Atomen und Me' ein Alkalimetall bedeuten und

c) einem tertiären aliphatischen Triamin.

Ein weiterer Gegenstand der Erfindung betrifft die Herstellung obiger Katalysatoren, die dadurch gekennzeichnet ist, dass man die Komponenten a), b) und c) in beliebiger Reihenfolge in einem aliphatischen oder aromatischen Kohlenwasserstoff als Lösungsmittel löst und miteinander bei Temperaturen von 0 bis 100°C umsetzt.

Ein weiterer Gegenstand der Erfindung ist die Verwendung des erfindungsgemässen Katalysators zur Herstellung von telomeren Polybutadien-Homo- oder Copolymerisaten in Gegenwart von Telogenen.

Die Verwendung des erfindungsgemässen Katalysators ermöglicht es, telomere flüssige Polybutadienöle in hohen Ausbeuten herzustellen, wobei das Polybutadienöl in kontrolliertes Molekulargewicht und einen bestimmten 1,2-(Vinyl)-Gehalt aufweist. Das Molgewicht beträgt bevorzugt von 500 bis 3000 ($M_n$), der 1,2(Vinyl)-Gehalt von 35 bis 45%. Das aliphatische tertiäre Triamin bewirkt im Gegensatz zu TMEDA eine Verringerung des Molgewichtes des telomeren Öls, ohne den 1,2(Vinyl)-Gehalt des Produktes stark ansteigen zu lassen. Die Molgewichtsregelung selbst ist deutlich verbessert gegenüber der Verwendung von TMEDA. Weitere Vorteile sind geringe Restgehalte an Lösungsmittel und Katalysatorrückstände im Endprodukt.

Die Reste R und R' der Katalysatorkomponenten a) und b) bedeuten bevorzugt Ethyl, Propyl, n-Butyl, sek.-Butyl, tert.-Butyl, Pentyl, (Cyclo)-Hexyl, Heptyl, Octyl, Phenyl, Benzyl, Tolyl; für R wird n-Butyl, für R' tert.-Butyl besonders bevorzugt. Me' ist vorzugsweise Li, Na, K, Rb, Cs; besonders bevorzugt K.

Als tertiäres aliphatisches Triamin wird Pentamethyldiethylentriamin besonders bevorzugt.

Das molare Verhältnis der Komponente a) zu b) beträgt bevorzugt 0,1 bis 50:1, besonders bevorzugt 1 bis 20:1. Das molare Verhältnis der Komponente a) zu c) beträgt bevorzugt 0,1 bis 10:1, besonders bevorzugt 0,5 bis 5:1.

Als Lösungsmittel, welches bei der Herstellung als Katalysator eingesetzt wird, kann beispielsweise (Cyclo)-Hexan, Heptan, Benzol, Toluol, Xylol, vorzugsweise Toluol, benutzt werden. Es sei an dieser Stelle darauf hingewiesen, dass einige der genannten Lösungsmittel auch Telogene darstellen. Die Ausgangskomponenten a), b) und c) werden in den gleichen Mengenverhältnissen zugegeben, wie sie anteilig im Endprodukt vorhanden sind.

Eine bevorzugte Herstellungsvariante besteht darin, den Katalysator in Gegenwart von Telogenen zu präformieren. Unter Präformieren soll die Reaktion der Katalysatorkomponenten bei Abwesenheit von Monomeren in einem Lösungsmittel, vorzugsweise dem verwendeten Telogen, verstanden werden.

Wie bereits geschildert, kann der erfindungsgemässe Katalysator zur Herstellung von Polybutadien-Telomeren eingesetzt werden. Es ist vorteilhaft, ihn in solcher Weise zuzugeben, dass die Komponente a) in Mengen von 0,1 bis 20 millimol, bevorzugt 0,5 bis 5 millimol pro 100 g Monomer anwesend ist. Das Polymerisationsverfahren wird vorteilhafterweise so durchgeführt, dass man das Telogen, gegebenenfalls im Gemisch mit inerten Lösungsmitteln wie (cyclo)aliphatische Kohlenwasserstoffe, beispielsweise (cyclo)-Hexan oder Benzol zusammen mit dem Katalysator vorlegt und die Monomeren bei einer gewünschten Reaktionstemperatur zudosiert. Die Reaktionstemperatur beträgt beispielsweise 40 bis 150°C, bevorzugt 50 bis 100°C.

Als Telogene kommen vor allem alkylaromatische Kohlenwasserstoffe, wie Toluol, Xylol, Mesitylen, (Iso-)Durol, Ethylbenzol, Isopropylbenzol, Diisopropylbenzol, Triisopropylbenzol, Pentamethylbenzol, Hexamethylbenzol in Frage, wobei Toluol bevorzugt wird.

Die Gewichtsmenge des eingesetzten Telogens kann das 0,05- bis 5fache, bevorzugt 0,07- bis 1fache des Monomeren betragen.

Als Monomere kommen ausser Butadien alle mit Butadien copolymerisierbaren Monomeren wie Isopren, χ-Methylstyrol, Piperylen, Ethylen und Styrol in Betracht.

Nach Beendigung der Telomerisationsreaktion wird der Katalysator inaktiviert, und zwar vorzugsweise durch Zugabe einer protonenaktiven Substanz wie z. B. Wasser, Alkohole oder Carbonsäuren. Die Katalysatorreste können beispielsweise durch Extraktion aus dem Produkt entfernt werden, jedoch besteht ein besonderer Vorzug des erfindungsgemässen Katalysators darin, dass eine solche Massnahme in vielen Fällen nicht notwendig ist. Überschüssiges Telogen bzw. Lösungsmittel wird, vorzugsweise durch Verdampfen, von dem Produkt abgetrennt, wobei wegen der hohen Aktivität des Katalysators in der Regel nur ein geringer Aufwand nötig ist.

Beispiele

Alle Versuche wurden mit getrockneten Lösungsmitteln und Reagentien unter Stickstoff-Atmosphäre durchgeführt. Die Mikrostruktur der Polybutadienöle wurde IR-spektroskopisch, das Molekulargewicht dampfdruckosmometrisch bestimmt. Butyllithium wurde als 2,1-molare Lösung in n-Hexan verwendet. Die verwendeten Basen TMEDA und PMDTA wurden über Calciumhydrid getrocknet und abdestilliert.

Beispiel 1

Es wurde eine Versuchsreihe gefahren, aus der die verbesserte Molgewichtsregelung mit PMDTA gegenüber TMEDA hervorgeht. Gleichzeitig ist zu erkennen, dass mit PMDTA der 1,2-Gehalt der telomeren Öle deutlich niedriger liegt als mit TMEDA.

a) In einem 1 l Kolben wurden 200 ml Toluol, 5 mmol BuLi und 0,5 mmol K-tert.-butoxid bei 60°C vorgelegt. In die gut gerührte Mischung wurde mit ca. 150 g/h Butadien gasförmig eingeleitet. Nach 2h wurde mit Ameisensäure abgestoppt, die flüchtigen Bestandteile wurden im Vakuum entfernt.

$M_n$ 6500, 1,2-Anteile 36,7%.

b) bis g) Die folgenden Versuche wurden analog zu a), jedoch mit steigenden Mengen TMEDA bzw. PMDTA durchgeführt. Ergebnisse siehe Tabelle.

|     | mmol TMEDA | mmol PMDTA | 1,2-Anteile % | $M_n$ |
|-----|------------|------------|---------------|-------|
| a)  | –          | –          | 36,7          | 6500  |
| b)  | 1,0        | –          | 54,2          | 3200  |
| c)  | –          | 1,0        | 54,9          | 2200  |
| d)  | 3,0        | –          | 59,9          | 2400  |
| e)  | –          | 3,0        | 46,1          | 830   |
| f)  | 5,0        | –          | 61,9          | 2200  |
| g)  | –          | 5,0        | 45,2          | 790   |

h): In einem 1-l-Kolben wurden 200 ml Toluol, 5 mmol BuLi und 0,25 mmol K-tert.-butoxid bei 90°C vorgelegt. In die gerührte Mischung wurde mit ca. 150 g/h gasförmiges Butadien eingeleitet. Nach 2h wurde mit Ameisensäure abgestoppt, die flüchtigen Bestandteile wurden im Vakuum entfernt. Es resultierte ein Produkt mit dem Molekulargewicht $M_n$ 3900, 1,2-Gehalt 21,8%.

i) bis o): Die folgenden Beispiele wurde wie Beispiel 1 h mit den angegebenen Mengen TMEDA bzw. PMDTA durchgeführt. Ergebnisse siehe Tabelle.

| | mmol TMEDA | mmol PMDTA | 1,2-Anteile % | $M_n$ |
|---|---|---|---|---|
| h) | – | – | 21,8 | 3900 |
| i) | 1,0 | – | 44,4 | 1700 |
| k) | – | 1,0 | 43,5 | 1400 |
| l) | 3,0 | – | 54,0 | 1260 |
| m) | – | 3,0 | 37,6 | 680 |
| n) | 5,0 | – | 55,5 | 1210 |
| o) | – | 5,0 | 37,2 | 610 |

Beispiel 2

a) In eine Mischung aus 500 ml Toluol, 5,0 mmol BuLi und 220 mg Kalium-tert.-butoxid wurde bei 90°C mit 500g/hgasförmiges Butadien eingeleitet. Aufarbeitung wie in Beispiel 1 gab ein Öl vom Molgewicht 2500 und 44,0% 1,2-Anteilen.

b) Wie a), nur wurde zusätzlich 1,0 mmol PMDTA zugegeben. Molgewicht 1300, 1,2-Gehalt 38,8%.

c) Es wurde gearbeitet wie unter b) mit dem Unterschied, dass dem Ansatz 5,0 mmol PMDTA (statt 1,0 mmol) zugesetzt wurden. Das Öl fiel mit einem Molgewicht von 1200 und 38,3% Vinyleinheiten an.

Beispiel 3

a) In eine Mischung aus 50 ml Toluol, 5,0 mmol BuLi und 110 mg K-tert.-butoxid wurde bei 90°C mit einer Geschwindigkeit von etwa 150 g/h gasförmiges Butadien eingeleitet. Nach Aufarbeitung wie in Beispiel 1 a) wurde ein Öl mit einem Molekulargewicht von 2000 und 39,8% 1,2-Butadien-Anteilen isoliert.

b) Wie a) mit dem Unteschied, dass der Katalysator zusätzlich 2,5 mmol PMDTA enthielt, Molgewicht 1200, 1,2-Gehalt 39,6%.

Beispiel 4

In einem trockenen 6-l-Autoklaven wurden 295 ml Toluol unter Stickstoff vorgelegt und auf 70°C gebracht. Ein Katalysator wurde in 50 ml Toluol in einem separaten Gefäss 2 Stunden bei Raumtemperatur aus folgenden Bestandteilen präformiert:

14,72 mmol BuLi, 8,85 mmol PMDTA und 5,9 mmol K-tert.-butoxid.

Nachdem die präformierte Katalysatormischung in den Autoklaven überführt worden war, wurde flüssiges Butadien mit etwa 0,84 l/h eingepumpt. Nach etwa 5 bis 6 Stunden waren 2,6 kg Butadien zugepumpt. Der Ansatz wurde nach dem Abkühlen mit 10 ml 85%iger Ameisensäure abgestoppt und flüchtige Anteile wurden am Dünnschichtverdampfer entfernt. Ausbeute 2450 g (entsprechend 166 kg Öl/BuLi-Äquivalent) eines gelblichen Öls vom Molekulargewicht 1600 mit einem 1,2-Gehalt von 38,3%.

Beispiel 5

Eine Katalysatormischung aus 350 ml Toluol, 123 mmol BuLi, 82,6 mmol PMDTA und 40 mmol Kalium-tert.-butoxid wurde 2 Stunden bei Raumtemperatur präformiert. Diese Mischung wurde in einen trockenen, mit Stickstoff gespülten 40-l-Autoklaven gegeben, der 1715 ml Toluol enthielt und auf 70°C gebracht worden war.

Innerhalb etwa 20 Stunden wurde flüssiges Butadien mit etwa 1,47 l/h zugepumpt, bis 18,2 kg eindosiert waren. Nach dem Abkühlen wurde der Katalysator mit 85%iger Ameisensäure desaktiviert und das überschüssige Toluol am Dünnschichtverdampfer entfernt. Ausbeute 17,4 kg eines gelblichen Öls (entsprechend 141 kg Öl/BuLi-Äquivalent) mit einem Molgewicht von 1500 und 39,2% 1,2-Anteilen.

**Patentansprüche**

1. Katalysator bestehend aus
a) einer metallorganischen Verbindung RLi, in der R einen gesättigten aliphatischen oder aromatischen Kohlenwasserstoffrest mit 2 bis 8 C-Atomen darstellt.
b) einer Verbindung R'OMe', in der R' einen gesättigten aliphatischen oder aromatischen Kohlenwasserstoffrest mit 2 bis 8 C-Atomen und Me' ein Alkalimetall bedeuten und
c) einem tertiären aliphatischen Triamin.

2. Katalysator gemäss Anspruch 1, enthaltend als Komponente c) Pentamethyldiethylentriamin.

3. Katalysator gemäss Ansprüchen 1 und 2, gekennzeichnet durch ein molares Mengenverhältnis der Komponenten a) zu b) von 0,1 bis 50:1 und der Komponenten a) zu c) von 0,1 bis 10:1.

4. Katalysator gemäss Anspruch 3, gekennzeichnet durch ein molares Mengenverhältnis der Komponenten a) zu b) von 1 bis 20:1 und der Komponenten a) zu c) von 0,5 bis 5:1.

5. Verfahren zur Herstellung des Katalysators gemäss Ansprüchen 1 bis 4, dadurch gekennzeichnet, dass man die Komponenten a), b) und c) in beliebiger Reihenfolge in einem aliphatischen oder aromatischen Kohlenwasserstoff löst und miteinander bei Temperaturen von 0 bis 100°C umsetzt.

6. Verfahren gemäss Anspruch 5, dadurch gekennzeichnet, dass man die Komponenten a), b) und c) in Gegenwart eines Telogens präformiert.

7. Verwendung des Katalysators gemäss Ansprüchen 1 bis 4 bei der Herstellung von telomeren Polybutadien-Homo- oder Copolymerisaten.

8. Verwendung gemäss Anspruch 7, gekennzeichnet durch eine Mengenzugabe des Katalysators von 0,1 bis 20 millimol der Komponente a) pro 100 g Monomer.

9. Verwendung des Katalysators gemäss Ansprüchen 1 bis 4 bei der Herstellung von telomeren Polybutadien Homo- oder Copolymerisaten, wobei die Gewichtsmenge des Telogens 0,05- bis 5fach der des Monomeren ist.

## Claims

1. A catalyst consisting of

a) an organometallic compound RLi, in which R represents a saturated aliphatic or aromatic hydrocarbon radical having 2 to 8 carbon atoms

b) a compound R'OMe', in which R' denotes a saturated aliphatic or aromatic hydrocarbon radical having 2 to 8 carbon atoms and Me' denotes an alkali metal and

c) a tertiary aliphatic triamine.

2. A catalyst according to Claim 1, containing, as component c), pentamethyldiethylenetriamine.

3. A catalyst according to Claims 1 and 2, characterised by a molar ratio of components a) and b) of from 0.1 to 50:1 and of components a) and c) of from 0.1 to 10:1.

4. A catalyst according to Claim 3, characterised by a molar ratio of components a) and b) of from 1 to 20:1 and of components a) and c) of from 0.5 to 5:1.

5. A process for the preparation of the catalyst according to Claims 1 to 4, characterised in that components a), b) and c) are dissolved, in any order, in an aliphatic or aromatic hydrocarbon and reacted with each other at temperatures of from 0 to 100°C.

6. A process according to Claim 5, characterised in that components a), b) and c) are pre-formed in the presence of a telogen.

7. The use of the catalyst according to Claims 1 to 4 in the preparation of telomeric polybutadiene homo- or co-polymers.

8. The use according to Claim 7, characterised in that the catalyst is used in an amount corresponding to from 0.1 to 20 millimols of component a) per 100 g of monomer.

9. The use of the catalyst according to Claims 1 to 4 in the preparation of telomeric polybutadiene homo- or co-polymers, wherein the weight of telogen used is 0.05 to 5 times that of the monomer.

## Revendications

1. Catalyseur constitué de:

a) un composé organométallique RLi dans lequel R représente un radical d'hydrocarbure aliphatique ou aromatique saturé contenant 2 à 8 atomes de carbone,

b) un composé R'OMe' dans lequel R' représente un radical d'hydrocarbure aliphatique ou aromatique saturé contenant 2 à 8 atomes de carbone, tandis que Me' représente un métal alcalin, et

c) une triamine aliphatique tertiaire.

2. Catalyseur suivant la revendication 1, contenant la pentaméthyl-diéthylène-triamine comme composant (c).

3. Catalyseur suivant les revendications 1 et 2, caractérisé en ce qu'il contient les composants (a) et (b) dans un rapport molaire quantitatif de 0,1 à 50:1 et les composants (a) et (c), dans un rapport molaire quantitatif de 0,1 à 10:1.

4. Catalyseur suivant la revendication 3, caractérisé en ce qu'il contient les composants (a) et (b) dans un rapport molaire quantitatif de 1 à 20:1 et les composants (a) et (c), dans un rapport molaire quantitatif de 0,5 à 5:1.

5. Procédé de préparation du catalyseur suivant les revendications 1 à 4, caractérisé en ce qu'on dissout les composants (a), (b) et (c), dans n'importe quel ordre, dans un hydrocarbure aliphatique ou aromatique, tandis qu'on les fait réagir l'un avec l'autre à des températures de 0 à 100°C.

6. Procédé suivant la revendication 5, caractérisé en ce qu'on forme préalablement les composants (a), (b) et (c) en présence d'un télogène.

7. Utilisation du catalyseur suivant les revendications 1 à 4 lors de la préparation d'homopolymères ou de copolymères télomères de polybutadiène.

8. Utilisation suivant la revendication 7, caractérisée en ce qu'on ajoute le catalyseur de telle sorte que le composant (a) soit présent en une quantité de 0,1 à 20 millimoles pour 10 g du monomère.

9. Utilisation du catalyseur suivant les revendications 1 à 4 lors de la préparation d'homopolymères ou de copolymères télomères de polybutadiène, la quantité pondérale du télogène étant égale à 0,05–5 fois celle du monomère.